# FASCICULE DE BREVET EUROPEEN

(11) **EP 0 345 179 B1**
(45) Date de publication et mention de la délivrance du brevet: **17.03.1993**
(21) Numéro de dépôt: 89420193.8
(22) Date de dépôt: 01.06.1989
(51) Int. Cl.: F16K 3/34, F16L 55/02

(54) **Vanne de réglage ou de régulation**
Einstellbares oder regulierendes Ventil
Adjusting or regulating valve

(30) Priorité: 03.06.1988 FR 8807872
(43) Date de publication de la demande: 06.12.1989
(73) Titulaire: VANATOME, F-07100 Annonay (FR)
(72) Inventeur: Martin, Roger, F-07100 St Cyr (FR)
(74) Mandataire: Bratel, Gérard

(56) Documents cités:
- CH-A- 239 595
- DE-A- 1 093 633
- GB-A- 213 816
- US-A- 3 312 241
- US-A- 4 098 294

## Description

La présente invention concerne une vanne de réglage ou de régulation d'un débit et/ou d'une pression de fluide. Plus particulièrement, cette invention se rapporte à une vanne du genre de celles comportant au moins un obturateur perforé à faces planes, déplaçable en translation ou en rotation dans son plan sous l'action de moyens de commande, et disposé entre deux éléments fixes pourvus chacun de passages pour le fluide, dont l'écoulement s'effectue selon une direction générale perpendiculaire au plan du ou des obturateurs, le ou chaque obturateur comportant une multitude de perforations et les passages, ménagés dans les deux éléments fixes situés de part et d'autre du ou des obturateurs, étant constitués par une multitude de canaux traversants, chacun de section droite relativement faible, la disposition des canaux de l'un des éléments fixes étant la même que pour les canaux de l'autre élément fixe.

On connaît déjà des vannes dont l'obturateur est constitué par un élément perforé en forme de disque, de tambour ou de secteur, monté tournant autour de son axe sous l'action de moyens de commande extérieurs, et disposé entre deux éléments fixes pourvus chacun d'au moins un passage pour le fluide. Dans ce genre de vannes, la mise en coïncidence des perforations de l'élément tournant avec les passages des éléments fixes, situés de part et d'autre de l'élément tournant, autorise la circulation du fluide. Au contraire, le décalage des perforations de l'élément tournant par rapport aux passages des éléments fixes interrompt la circulation du fluide. Des vannes de ce genre sont déjà décrites, par exemple, dans les brevets français FR-A-: 1 235 296 - 2 512 513 - 2 542 843 - 2 563 602. En particulier, le FR-A-1 235 296 qui représente l'état de la technique le plus proche montre une vanne de ce genre avec un obturateur pourvu de perforations multiples, disposé entre deux éléments fixes également pourvus de passages ou canaux multiples de même disposition ; le réglage du débit, se répartissant dans ces passages, s'effectue ici en masquant ou découvrant plus ou moins, de façon simultanée, tous les passages précités (et non pas en modifiant le nombre des passages parcourus par le fluide). Par ailleurs, le brevet français FR-A-2 512 513 révèle une vanne pourvue d'une plaque obturatrice en forme de secteur de cercle, montée tournante autour de son axe qui est parallèle à l'axe des passages définis par les éléments fixes, et décalé latéralement par rapport à l'axe de ces passages.

Toutes ces vannes connues présentent encore des inconvénients ou des insuffisances. La plupart d'entre elles sont conçues seulement comme des vannes possédant une position d'ouverture et une position de fermeture, et non pas comme des vannes permettant un réglage de débit continu, entre une position de fermeture et une position d'ouverture maximale, avec une infinité de positions intermédiaires. Certaines vannes sont prévues effectivement comme des vannes de réglage ou de régulation (voir par exemple le brevet français FR-A-2 563 602), mais elles utilisent des passages de section relativement importante, masqués plus ou moins et de manière simultanée par l'élément perforé mobile formant obturateur ; ainsi, en cours de fonctionnement, ces dernières vannes sont sujettes à des phénomènes gênants : perturbations de l'écoulement du fluide avec détente et instabilité au niveau de l'obturateur, excentration ou dissymétrie de cet écoulement, bruits importants.

Le brevet GB-A-213816 révèle une vanne comportant un obturateur rotatif en forme de disque, avec une large ouverture unique en forme de secteur, monté entre deux éléments fixes dont l'un comporte des trous répartis selon leur quadrillage régulier, et dont l'autre est pourvu de plusieurs passages en forme d'arcs de cercle concentriques. Le réglage de débit s'effectue ici, en partie, par modification du nombre de ces passages masqués ou découverts. Cependant, la disposition des trous de l'un des éléments fixes ne correspond pas à celle des passages de l'autre pièce fixe et, compte tenu aussi de la conformation de l'obturateur, le débit total n'est pas subdivisé en débits partiels dans toute la traversée de la vanne. Ainsi l'écoulement reste dissymétrique et fortement perturbé, au coeur même de cette vanne.

La présente invention vise à éliminer tous ces inconvénients, en fournissant une vanne de réglage ou de régulation dans laquelle la variation progressive de la section de passage du fluide est obtenue sans perturbation de l'écoulement du fluide, lequel reste stable et peut être maintenu centré ou symétrique, le fonctionnement de cette vanne s'effectuant dans des conditions de bruit très faible.

A cet effet, l'invention a essentiellement pour objet une vanne de réglage ou de régulation, du genre précisé en introduction, dans laquelle la disposition des perforations du ou de chaque obturateur et des canaux des éléments fixes est telle que le déplacement progressif du ou des obturateurs provoque une modification progressive du nombre de canaux masqués ou découverts, le débit total de fluide se subdivisant en un nombre correspondant de débits partiels, qui s'écoulent par les canaux ainsi découverts.

Ainsi, contrairement à la plupart des vannes actuelles, la variation du débit est obtenue dans la vanne objet de la présente invention par modification du nombre des canaux, fins et très nombreux, qui sont parcourus par le fluide, et non pas par une variation de la section utile de passage d'un seul canal ou de quelques canaux. En d'autres termes, dans le cas de l'invention, chaque canal est ouvert ou fermé selon la position du ou des obturateurs, et lorsqu'un canal n'est pas masqué, sa section utile correspond à sa section totale et le fluide qui le parcourt ne rencontre aucun obstacle susceptible de perturber son écoulement.

De préférence, la vanne de réglage ou de régulation, objet de l'invention, possède deux obturateurs qui comportent des perforations de dispositions correspondantes, et qui sont déplaçables en sens opposés sous l'action des moyens de commande. Les deux obturateurs peuvent être constitués, notamment, par deux disques ou secteurs de cercle perforés, accolés et montés tournants autour d'un même axe, les moyens de commande étant agencés de manière à commander la rotation de ces deux disques ou secteurs de manière simultanée et en sens opposés. On obtient ainsi, quel que soit le degré d'ouverture de la vanne, un écoulement toujours bien centré et symétrique.

Les perforations multiples du ou des obturateurs peuvent présenter la forme de petits trous circulaires ou de lumières oblongues, et plus particulièrement de lumières ménagées suivant des arcs de cercle concentriques, centrés sur l'axe du ou des obturateurs, dans le cas d'au moins un obturateur rotatif.

Dans une forme de réalisation simple, les multiples canaux des deux éléments fixes, situés de part et d'autre du ou des obturateurs, sont tous parallèles entre eux et à la direction générale de l'écoulement du fluide.

Dans le cas d'au moins un obturateur rotatif, les multiples canaux des deux éléments fixes sont de préférence ménagés suivant des arcs de cercle centrés sur l'axe de rotation du ou des obturateurs. Ces canaux peuvent, en outre, être répartis sur des lignes rayonnantes à partir de l'axe de rotation du ou des obturateurs.

Selon une autre caractéristique de l'invention, contribuant à l'uniformité de l'écoulement, les deux éléments fixes situés de part et d'autre du ou des obturateurs présentent des parties concaves profilées, du côté le plus éloigné du ou des obturateurs, les multiples canaux de ces deux éléments fixes débouchant dans lesdites parties concaves.

De toute façon, l'invention sera mieux comprise à l'aide de la description qui suit, en référence au dessin schématique annexé représentant, à titre d'exemple non limitatif, une forme de réalisation de cette vanne de réglage ou de régulation :
Figure 1 est une vue en coupe passant par l'axe d'une vanne conforme à l'invention, dont les obturateurs sont constitués par deux disques rotatifs perforés ;
Figure 2 est une vue en coupe suivant II-II de figure 1, montrant la disposition des canaux ménagés dans les éléments fixes ;
Figure 3 est une vue de face partielle d'un obturateur rotatif de la vanne de figure 1.

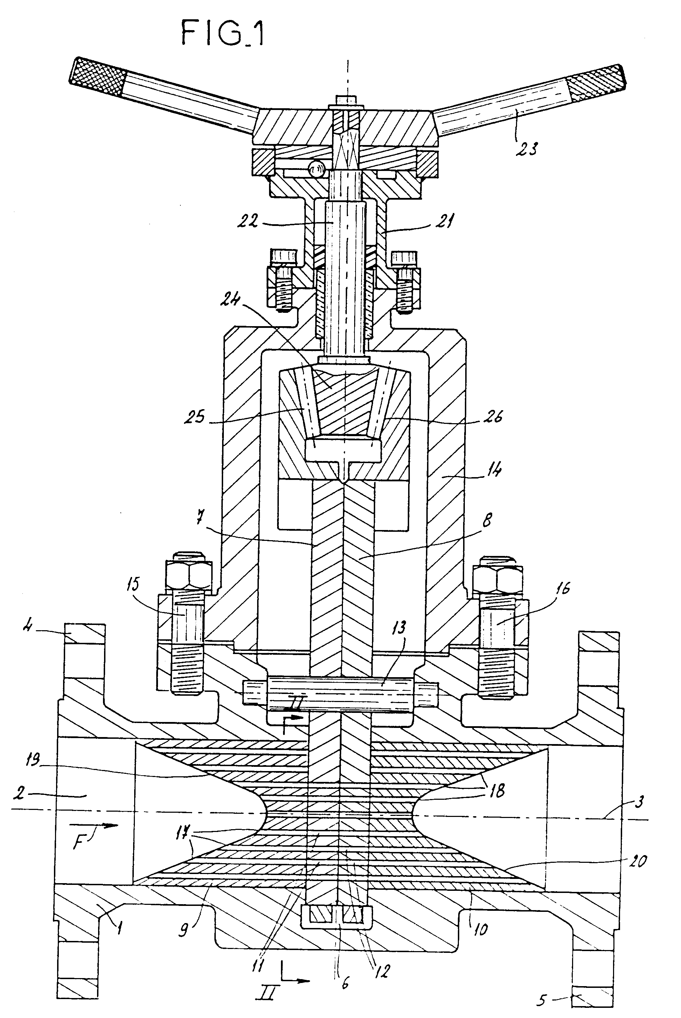

La vanne de réglage ou de régulation, représentée dans son ensemble sur la figure 1, comprend un corps tubulaire 1 délimitant un conduit général 2 de section circulaire et d'axe 3, le corps 1 pouvant comporter à ses deux extrémités des brides de fixation ou de raccordement, respectivement 4 et 5. La partie centrale du corps 1 forme une cavité 6 recevant deux obturateurs accolés 7 et 8, lesquels sont disposés entre deux pièces fixes, respectivement 9 et 10, montées dans le corps 1 à l'intérieur du conduit 2.

Les deux obturateurs sont constitués ici par deux disques 7 et 8, pourvus chacun d'une série de perforations, respectivement 11 et 12, dont la disposition sera précisée plus bas. Les deux disques 7 et 8, de même diamètre, sont montés tournants autour d'un même axe 13, qui est parallèle à l'axe 3 du conduit général 2 et qui se situe sur le côté de ce conduit 2. Ainsi, les deux disques rotatifs perforés 7 et 8 possèdent seulement une partie limitée se trouvant en correspondance avec le conduit 2 et avec la section du corps 1. Le restant des deux disques 7 et 8 est logé à l'intérieur d'un boîtier 14 fixé sur le corps 1 au moyen de boulons 15,16 et faisant saillie latéralement par rapport à ce corps 1.

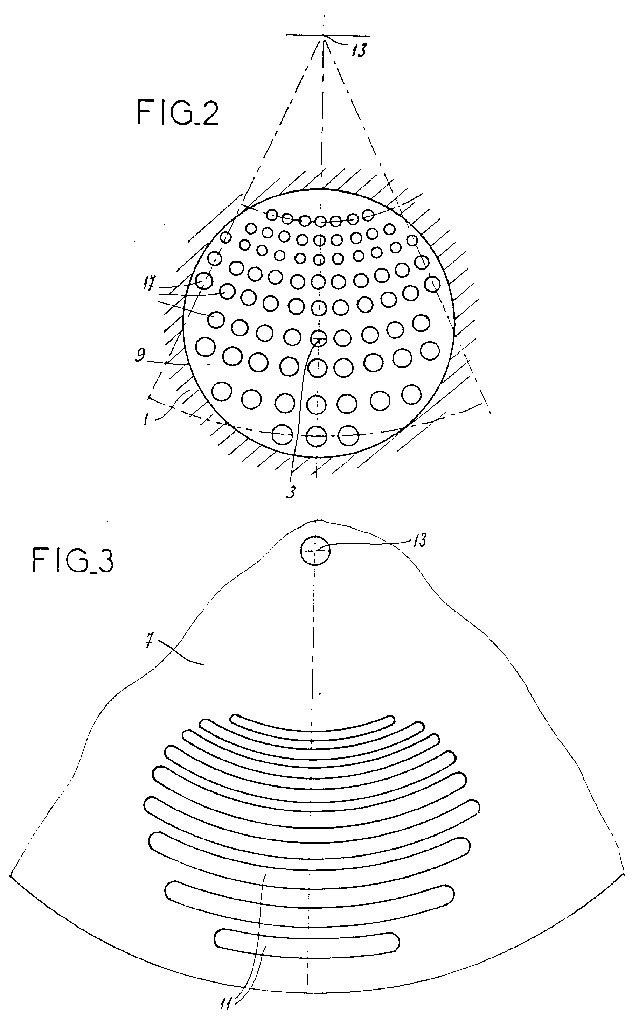

Les deux pièces fixes 9 et 10, disposées symétriquement de part et d'autre des deux disques rotatifs perforés 7 et 8, comportent chacune une multitude de canaux, respectivement 17 et 18, qui possèdent chacun une faible section et qui sont tous parallèles entre eux et à l'axe 3 du conduit général 2. Chacune des deux pièces fixes 9 et 10 présente, sur son côté le plus éloigné des disques 7 et 8, une partie concave profilée d'allure convergente ou divergente, respectivement 19 et 20, dans laquelle débouchent les canaux respectivement 17 et 18. La figure 2 montre une disposition possible pour les canaux 17 de la pièce fixe 9 (la disposition étant la même pour les canaux 18 de l'autre pièce fixe 10) : en considérant la pièce fixe 9 vue en coupe transversale, les canaux 17 sont ménagés suivant une série d'arcs de cercle de rayons croissants, tous centrés sur l'axe commun de rotation 13 des deux disques 7 et 8. De plus, les canaux 17 sont répartis sur des lignes rayonnantes à partir dudit axe de rotation 13.

Le boîtier 14 est pourvu de moyens de commande, pour l'entraînement en rotation des deux disques rotatifs perforés 7 et 8. Ces moyens comprennent un palier 21 dans lequel est monté tournant un arbre d'entraînement 22, perpendiculaire aux axes 3 et 13. L'arbre 22 porte, à son extrémité extérieure, un volant de manoeuvre 23 et, à son extrémité intérieure, un pignon d'entraînement 24. Les deux disques 7 et 8 comportent chacun, sur au moins une partie de leur périphérie, des dentures respectivement 25 et 26, qui sont en prise avec le même pignon d'entraînement 24. Ainsi, la manoeuvre du volant 23 fait tourner les deux disques 7 et 8 de manière simultanée, et en sens opposés, autour de leur axe commun 13, ceci par l'intermédiaire du pignon d'entraînement 24.

Le fonctionnement de la vanne nécessite une disposition particulière des perforations 11 et 12 des deux disques rotatifs 7 et 8. Une disposition possible est illustrée par la figure 3, pour les perforations 11 du disque 7 (la disposition étant la même pour les perforations 12 de l'autre disque 8) ; ces perforations sont constituées par des lumières allongées 11, ménagées dans une zone du disque 7 suivant des arcs de cercle concentriques, centrés sur l'axe de rotation 13 de l'obturateur 7 considéré. Les rayons croissants des arcs de cercle, suivant lesquels sont ménagées les lumières 11, correspondent aux rayons des arcs de cercle suivant lesquels sont ménagés les canaux respectifs 17 et 18 des deux pièces fixes 9 et 10. Ainsi, chaque lumière 11 ou 12 peut venir en correspondance avec un certain nombre de canaux 17 et 18.

En supposant que l'entrée du fluide se fasse du côté de la bride de gauche 4, le fluide est susceptible de s'écouler dans la direction générale de la fléche F, à l'intérieur du conduit 2. En fonction des positions angulaires occupées par les deux disques 7 et 8, leurs lumières respectives 11 et 12 viennent plus ou moins en correspondance les unes avec les autres, ainsi qu'avec les débouchés des canaux 17 et 18 ménagés dans les deux pièces fixes 9 et 10. Plus précisément, selon les positions angulaires des disques 7 et 8, un nombre plus ou moins grand de canaux 17 et 18 ont leurs débouchés masqués ou découverts. Ainsi, le débit total de fluide, entrant dans le conduit 2 de la vanne, se subdivise en un certain nombre de débits partiels qui s'écoulent par les canaux 17 et 18 se trouvant dégagés à un moment donné et, selon le nombre de canaux 17 et 18 dégagés, le débit total autorisé est plus ou moins fort. Bien entendu, les disques 7 et 8 peuvent occuper aussi une position angulaire particulière dans laquelle ils masquent les débouchés de tous les canaux 17 et 18, pour donner une position de fermeture de la vanne.

On comprend que la forme et la disposition des perforations 11 ou 12 des disques 7 et 8, montrée sur la figure 3, n'est nullement restrictive, le principe de fonctionnement décrit précédemment pouvant être aussi obtenu avec des perforations qui, au lieu d'avoir la forme de lumières en arcs de cercle, centrées sur l'axe 13 des disques respectifs 7 et 8, auraient la forme de petits trous circulaires, par exemple répartis sur des cercles concentriques.

Comme il va de soi, et comme il ressort de ce qui précède, l'invention ne se limite pas à la seule forme de réalisation de cette vanne de réglage ou de régulation qui a été décrite ci-dessus, à titre d'exemple ; elle en embrasse, au contraire, toutes les variantes de réalisation et d'application respectant le même principe. En particulier, l'on ne s'éloignerait pas du cadre de l'invention :
- en réalisant les obturateurs rotatifs sous la forme de secteurs de cercle, au lieu de disques complets ;
- en utilisant à la place de disques ou de secteurs rotatifs perforés des obturateurs constitués par deux plaques perforées, accolées et déplaçables en translation suivant la même direction mais en sens opposés ;
- en ne prévoyant qu'un seul obturateur, déplaçable en translation ou en rotation ;
- en ayant recours à tous équivalents des moyens décrits, notamment en ce qui concerne les moyens de commande pour l'actionnement du ou des obturateurs, ces moyens pouvant être manuels ou motorisés.

## Revendications

1. Vanne de réglage ou de régulation d'un débit et/ou d'une pression de fluide, du genre de celles comportant au moins un obturateur perforé (7,8) à faces planes, déplaçable en translation ou en rotation dans son plan sous l'action de moyens de commande (21 à 26), et disposé entre deux éléments fixes (9,10) pourvus chacun de passages (17,18) pour le fluide, dont l'écoulement s'effectue selon une direction générale (F) perpendiculaire au plan du ou des obturateurs (7,8), le ou chaque obturateur (7,8) comportant une multitude de perforations (11,12) et les passages, ménagés dans les deux éléments fixes (9,10) situés de part et d'autre du ou des obturateurs (7,8), étant constitués par une multitude de canaux traversants (17,18), chacun de section droite relativement faible, la disposition des canaux (17) de l'un (9) des éléments fixes étant la même que pour les canaux (18) de l'autre élément fixe (10), caractérisée en ce que la disposition des perforations (11,12) et des canaux (17,18) est telle que le déplacement progressif du ou des obturateurs (7,8) provoque une modification progressive du nombre de canaux (17,18) masqués ou découverts, le débit total de fluide se subdivisant en un nombre correspondant de débits partiels, qui s'écoulent par les canaux (17,18) ainsi découverts.

2. Vanne de réglage ou de régulation selon la revendication 1, caractérisée en ce qu'elle possède deux obturateurs (7,8) qui comportent des perforations (11,12) de dispositions correspondantes, et qui sont déplaçables en sens opposés sous l'action des moyens de commande (21 à 26).

3. Vanne de réglage ou de régulation selon la revendication 2, caractérisée en ce que les deux obturateurs sont constitués par deux disques ou secteurs de cercle perforés (7,8), accolés et montés tournants autour d'un même axe (13), les moyens de commande (21 à 26) étant agencés de manière à commander la rotation de ces deux disques ou secteurs (7,8), de manière simultanée et en sens opposés.

4. Vanne de réglage ou de régulation selon la revendication 3, caractérisée en ce que les deux obturateurs, conformés en disques ou secteurs de cercle perforés (7,8), comportent à leur périphérie des dentures respectives (25,26) en prise avec un même pignon d'entraînement (24), les moyens de commande (21 à 26) étant prévus pour faire tourner les deux obturateurs de manière simultanée et en sens opposés autour de leur axe commun (13) par l'intermédiaire du pignon d'entraînement (24).

5. Vanne de réglage ou de régulation selon l'une quelconque des revendications 1 à 4, caractérisée en ce que les perforations multiples du ou des obturateurs (7,8) présentent la forme de petits trous circulaires.

6. Vanne de réglage ou de régulation selon l'une quelconque des revendications 1 à 4, caractérisée en ce que les perforations multiples du ou des obturateurs (7,8) présentent la forme de lumières oblongues (11,12).

7. Vanne de réglage ou de régulation selon la revendication 6, avec au moins un obturateur rotatif, caractérisée en ce que les perforations du ou des obturateurs rotatifs (7,8) sont des lumières (11,12) ménagées suivant des arcs de cercle concentriques, centrés sur l'axe de rotation (13) du ou des obturateurs (7,8).

8. Vanne de réglage ou de régulation selon l'une quelconque des revendications 1 à 7, caractérisée en ce que les multiples canaux (17,18) des deux éléments fixes (9,10), situés de part et d'autre du ou des obturateurs (7,8), sont tous parallèles entre eux et à la direction générale (F) de l'écoulement du fluide.

9. Vanne de réglage ou de régulation selon la revendication 8, avec au moins un obturateur rotatif, caractérisée en ce que les multiples canaux (17,18) des deux éléments fixes (9,10) situés de part et d'autre du ou des obturateurs (7,8), sont ménagés suivant des arcs de cercle centrés sur l'axe de rotation (13) du ou des obturateurs (7,8).

10. Vanne de réglage ou de régulation selon la revendication 9, caractérisée en ce que les multiples canaux (17,18) des deux éléments fixes (9,10) sont en outre répartis sur des lignes rayonnantes à partir de l'axe de rotation (13) du ou des obturateurs (7,8).

11. Vanne de réglage ou de régulation selon l'une quelconque des revendications 1 à 10, caractérisée en ce que les deux éléments fixes (9,10) situés de part et d'autre du ou des obturateurs (7,8), présentent des parties concaves profilées (19,20) du côté le plus éloigné du ou des obturateurs (7,8), les multiples canaux (17,18) de ces deux éléments fixes (9,10) débouchant dans lesdites parties concaves (19,20).

12. Vanne de réglage ou de régulation selon la revendication 2, caractérisée en ce que les deux obturateurs sont constitués par deux plaques perforées, accolées et déplaçables en translation suivant la même direction mais en sens opposés.

## Patentansprüche

1. Ventil zum Regeln oder Regulieren eines Fluiddurchsatzes und/oder -druckes, der Art, welche wenigstens einen perforierten Schieber (7, 8) mit Planflächen aufweist, der in seiner Ebene translatorisch oder durch Drehung unter der Wirkung von Stellmitteln (21 bis 26) verstellbar ist, und welcher zwischen zwei festen Elementen (9, 10) angeordnet ist, die jeweils mit Durchgängen (17, 18) für das Fluid versehen sind, dessen Strömung entsprechend einer Hauptrichtung (F) erfolgt, die rechtwinklig zur Ebene des oder der Schieber (7, 8) steht, wobei der oder jeder Schieber (7, 8) eine Vielzahl von Durchbrechungen (11, 12) hat und die Durchgänge, die in den zu beiden Seiten des oder der Schieber (7, 8) angeordneten festen Elementen (9, 10) ausgebildet sind, durch eine Vielzahl von Durchgangskanälen (17, 18) gebildet sind, die jeweils einen reativ kleinen Querschnitt haben, und wobei die Anordnung der Kanäle (17) des einen (9) festen Elementes die gleiche wie die der Kanäle (18) des anderen festen Elementes (10) ist, dadurch gekennzeichnet, daß die Anordnung der Durchbrechungen (11, 12) und der Kanäle (17, 18) so getroffen ist, daß die zunehmende Verstellung des oder der Schieber (7, 8) eine zunehmende Änderung der Anzahl der verdeckten oder freigelegten Kanäle (17, 18) verursacht, wobei der gesamte Fluiddurchsatz sich in eine entsprechende Anzahl von Einzeldurchsätzen teilt, welche durch die so freigelegten Kanäle (17, 18) hindurch strömen.

2. Ventil zum Regeln oder Regulieren nach Anspruch 1, dadurch gekennzeichnet, daß es zwei Schieber (7, 8) hat, die Durchbrechungen (11, 12) mit einander entsprechender Anordnung aufweisen, und die unter der Wirkung von Stellmittteln (21 bis 26) gegensinnig verstellbar sind.

3. Ventil zum Regeln oder Regulieren nach Anspruch 2, dadurch gekennzeichnet, daß die beiden Schieber durch zwei perforierte Scheiben oder Kreissektoren (7, 8) gebildet sind, die um eine gemeinsame Achse (13) drehbar angeordnet und montiert sind, wobei die Stellmittel (21 bis 26) so ausgebildet sind, daß sie eine gleichzeitige und gegensinnige Drehung dieser beiden Scheiben oder Sektoren (7, 8) steuern.

4. Ventil zum Regeln oder Regulieren nach Anspruch 3, dadurch gekennzeichnet, daß die beiden als perforierte Scheiben oder Kreissektoren (7, 8) ausgebildeten Schieber an ihrem Umfang jeweils eine Verzahnung (25, 26) aufweisen, die mit einem gemeinsamen Antriebsritzel (24) im Eingriff sind, wobei die Stellmittel (21 bis 26) vorgesehen sind, um die beiden Schieber gleichzeitig und gegensinnig um ihre gemeinsame Achse (13) unter Zwischenschaltung des Antriebsritzels (24) zu drehen.

5. Ventil zum Regeln oder Regulieren gemäß einem der Ansprüche 1 bis 4, dadurch gekennzeichnet, daß die vielfachen Durchbrechungen des oder der Schieber (7, 8) die Form kleiner kreisförmiger Löcher haben.

6. Ventil zum Regeln oder Regulieren nach einem der Ansprüche 1 bis 4, dadurch gekennzeichnet, daß die vielfachen Durchbrechnungen des oder der Schieber (7, 8) die Form von länglichen Schlitzen (11, 12) haben.

7. Ventil zum Regeln oder Regulieren nach Anspruch 6, mit zumindest einem Drehschieber, dadurch gekennzeichnet, daß die Durchbrechnungen des oder der Drehschieber (7, 8) Schlitze (11, 12) sind, die entsprechend konzentrischen Kreisbögen angeordnet sind, welche zur Drehachse (13) des oder der Schieber (7, 8) zentriert sind.

8. Ventil zum Regeln oder Regulieren nach einem der Ansprüche 1 bis 7, dadurch gekennzeichnet, daß die vielfachen Kanäle (17, 18) der beiden zu beiden Seiten des oder der Schieber (7, 8) angeordneten festen Elemente (9, 10) alle zueinander parallel und in der Hauptrichtung (F) der Fluidströmung ausgerichtet sind.

9. Ventil zum Regeln oder Regulieren nach Anspruch 8, mit zumindest einem Drehschieber, dadurch gekennzeichnet, daß die vielfachen Kanäle (17, 18) der beiden zu beiden Seiten des oder der Schieber (7, 8) angeordneten festen Elemente (9, 10) entsprechend Kreisbögen ausgebildet sind, die zur Drehachse (13) des oder der Schieber (7, 8) zentriert sind.

10. Ventil zum Regeln oder Regulieren nach Anspruch 9, dadurch gekennzeichnet, daß die vielfachen Kanäle (17, 18) der beiden festen Elemente (9, 10) außerdem auf von der Drehachse (13) des oder der Schieber (7,8) ausgehenden Radiallinien mit Abstand verteilt angeordnet sind.

11. Ventil zum Regeln oder Regulieren nach einem der Ansprüche 1 bis 10, dadurch gekennzeichnet, daß die beiden zu beiden Seiten des oder der Schieber (7, 8) angeordneten festen Elemente (9, 10) auf der von dem oder den Schiebern (7, 8) abgewandten Seite konkav profilierte Bereiche (19, 20) haben, wobei die vielfachen Kanäle (17, 18) dieser beiden festen Elemente (9, 10) in diese konkaven Bereiche (19, 20) münden.

12. Ventil zum Regeln oder Regulieren nach Anspruch 2, dadurch gekennzeichnet, daß die beiden Schieber durch zwei perforierte Platten gebildet sind, die so angeordnet sind, daB sie in der gleichen Richtung, jedoch gegensinnig translatorisch verstellbar sind.

## Claims

1. Valve for adjusting or regulating the flow and/or pressure of a fluid, of the type comprising at least one perforated seal (7, 8) with flat faces, which can be moved in translation or rotation in its plane under the action of control means (21 to 26) and is disposed between two fixed elements (9, 10) each having passages (17, 18) for the fluid, the flow of which takes place in a general direction (F) perpendicular to the plane of the seal or seals (7, 8), the seal or seals (7, 8) having a multiplicity of perforations (11, 12), and the passages provided in the two fixed elements (9, 10) situated on each side of the seal or seals (7, 8) consisting of a multiplicity of ducts (17, 18) passing through them, each one having a relatively small cross section, the arrangement of the ducts (17) in one (9) of the fixed elements being the same as for the ducts (18) in the other fixed element (10), characterised in that the arrangement of the perforations (11, 12) and ducts (17, 18) is such that the progressive movement of the seal or seals (7, 8) causes a progressive change in the number of ducts (17, 18) closed or open, the total flow of fluid subdividing into a corresponding number of partial flows, which flow through the ducts (17, 18) thus opened.

2. Adjusting or regulating valve according to Claim 1, characterised in that it has two seals (7, 8) which include perforations (11, 12) with corresponding arrangements, and which can be moved in opposite directions under the action of control means (21 to 26).

3. Adjusting or regulating valve according to Claim 2, characterised in that the two seals consist of two perforated discs or sectors of a circle (7, 8), coupled and mounted so as to rotate about the same axis (13), the control means (21 to 26) being arranged so as to control the rotation of these two discs or sectors (7, 8), simultaneously and in opposite directions.

4. Adjusting or regulating valve according to Claim 3, characterised in that the two seals, shaped like perforated discs or sectors of a circle (7, 8), have on their periphery respective teeth (25, 26) engaging with the same drive gear (24), the control means (21 to 26) being designed to rotate the two seals simultaneously and in opposite directions about their common axis (13) through the drive gear (24).

5. Adjusting or regulating valve according to any one of Claims 1 to 4, characterised in that the multiple perforations in the seal or seals (7, 8) are in the form of small circular holes.

6. Adjusting or regulating valve according to any one of Claims 1 to 4, characterised in that the multiple perforations in the seal or seals (7, 8) are in the form of oblong slots (11, 12).

7. Adjusting or regulating valve according to Claim 6, with at least one rotating seal, characterised in that the perforations in the rotating seal or seals (7, 8) are slots (11, 12) provided on concentric arcs of a circle, centred on the axis of rotation (13) of the seal or seals (7, 8).

8. Adjusting or regulating valve according to any one of Claims 1 to 7, characterised in that the multiple ducts (17, 18) in the two fixed elements (9, 10), situated on each side of the seal or seals (7, 8) are all parallel to each other and to the general direction (F) of flow of the fluid.

9. Adjusting or regulating valve according to Claim 8, with at least one rotating seal, characterised in that the multiple ducts (17, 18) in the two fixed elements (9, 10), situated on each side of the seal or seals (7, 8), are provided on arcs of a circle centred on the axis of rotation (13) of the seal or seals (7, 8).

10. Adjusting or regulating valve according to Claim 9, characterised in that the multiple ducts (17, 18) in the two fixed elements (9, 10) are also distributed along lines radiating from the axis of rotation (13) of the seal or seals (7, 8).

11. Adjusting or regulating valve according to any one of Claims 1 to 10, characterised in that the two fixed elements (9, 10) situated on each side of the seal or seals (7, 8) have profiled concave parts (19, 20) on the side furthest away from the seal or seals (7, 8), the multiple ducts (17, 18) in these two fixed elements (9, 10) opening out into the said concave parts (19, 20).

12. Adjusting or regulating valve according to Claim 2, characterised in that the two seals consist of two perforated plates, coupled and movable in translation along the same line but in opposite directions.
